# EUROPEAN PATENT APPLICATION

(11) **EP 2 400 791 A1**
(43) Date of publication of application: **28.12.2011**
(21) Application number: 10743425.0
(22) Date of filing: 23.02.2010
(51) Int. Cl.: H04W 12/06

(54) **METHOD, DEVICE AND SYSTEM FOR PERFORMING ACCESS AUTHENTICATION**

(30) Priority: 23.02.2009 CN 200910037343
(71) Applicant: Huawei Technologies Co., Ltd., Shenzhen, Guangdong 518129 (CN)
(72) Inventor: XU, Yixian, Shenzhen Guangdong 518129 (CN); BI, Xiaoyu, Shenzhen Guangdong 518129 (CN); CHEN, Jing, Shenzhen Guangdong 518129 (CN); ZHAO, Jie, Shenzhen Guangdong 518129 (CN)
(74) Representative: Reinhard - Skuhra - Weise & Partner GbR
(86) International application number: PCT/CN2010/070711
(87) International publication number: WO 2010/094244

(57) **Abstract**

A method for performing access authentication by a User Equipment (UE) to access an Evolved Packet System (EPS) through a *non 3rd Generation Partnership Project (non-3GPP)* IP access network is disclosed. The method includes: by the UE that will access the EPS, obtaining an available access authentication mode, and performing access authentication by using the access authentication mode, where the types of a non-3GPP IP access network include a trusted IP access network, an untrusted IP access network, and a specific IP access network. With the method of the present invention, an available access authentication mode corresponding to different types of a non-3GPP IP access network are selected. The method guarantees that the UE may access a network successfully, and solves the problem that the UE may not perform authentication with an access network when the network neither supports the Extensible Authentication Protocol-Authentication and Key Agreement (EAP-AKA) or EAP-AKA' nor supports the deployment of an evolved Packet Data Gateway (ePDG). An apparatus and a system that use the method are also provided.

## Description

This application claims priority to Chinese Patent Application No. 200910037343.4, filed with the Chinese Patent Office on February 23, 2009 and entitled "METHOD, APPARATUS, AND SYSTEM FOR PERFORMING ACCESS AUTHENTICATION", which is incorporated herein by reference in its entirety.

### FIELD OF THE INVENTION

The present invention relates to communications network access technologies, and in particular, to a method, an apparatus, and a system for performing access authentication.

### BACKGROUND OF THE INVENTION

In the 3rd Generation Partnership Project (3GPP) specifications, non-3GPP IP access networks are classified into two types: one type is Trusted non-3GPP IP access network, for example, Code Division Multiple Access (CDMA) 2000 network and Worldwide Interoperability for Microwave Access (WiMAX) network, and the other type is Untrusted non-3GPP IP access network, for example, Wireless Local Area Network (WLAN). The Trusted non-3GPP IP access network may access a Public Land Mobile-communication Network (PLMN) through an S2a interface or an S2c interface. The Untrusted non-3GPP IP access network may access the PLMN through an S2b interface or an S2c interface.

A User Equipment (UE) accesses an Evolved Packet System (EPS) through a Trusted non-3GPP IP access network over the Extensible Authentication Protocol-Authentication and Key Agreement (EAP-AKA) or the Extensible Authentication Protocol-Authentication and Key Agreement (EAP-AKA'). The 3GPP Authentication, Authorization, and Accounting (AAA) server acts as an EAP-AKA server. When the Trusted non-3GPP IP access network accesses the EPS through an S2a interface, the access authentication is performed over EAP-AKA'. When the Trusted non-3GPP IP access network accesses the EPS through an S2c interface, the access authentication is performed over IKEv2+EAP-AKA. When the Untrusted non-3GPP IP access network accesses the EPS through an S2b interface, the access authentication is performed over IKEv2+EAP-AKA. However, not all current carrier networks support EAP-AKA or EAP-AKA'. For example, for an IP access network based on the Digital Subscriber Line (DSL), because the Extensible Authentication Protocol (EAP) is not supported, the authentication process of the Trusted non-3GPP IP access network may not be executed. In this case, the carrier network may regard the IP access network as an Untrusted non-3GPP IP access network. Then, the UE searches for an evolved Packet Data Gateway (ePDG), and attempts to access the network through the ePDG. However, not all current networks may support the deployment of an ePDG.

Because the UE does not know which authentication mode should be used to access the EPS through a non-3GPP IP access network, the efficiency of the UE in accessing the EPS is reduced, and even the UE may not access the EPS through a non-3GPP IP access network.

### SUMMARY OF THE INVENTION

Embodiments of the present invention provide a method, an apparatus, and a system for performing access authentication, so that a UE may know which access authentication mode may be used in the process of accessing an EPS through a non-3GPP IP access network.

The technical issue that embodiments of the present invention solve is to provide a method, an apparatus, and a system for notifying the UE of which access authentication mode may be used for accessing an EPS through a non-3GPP IP access network.
A method for performing access authentication according to an embodiment of the present invention includes: knowing, by a User Equipment, UE, that will access an Evolved Packet System, EPS, an available access authentication mode, and performing access authentication by using the access authentication mode, wherein: the access authentication mode corresponds to a type of a non 3rd Generation Partnership Project, non-3GPP, IP, access network where the UE currently resides, wherein the types of a non-3GPP IP access network comprise a trusted IP access network, an untrusted IP access network, and a specific IP access network.

Another method for performing access authentication according to an embodiment of the present invention includes: notifying, by an access control entity, an available access authentication mode to a User Equipment, UE, that will access an Evolved Packet System, EPS, so that the UE performs access authentication by using the access authentication mode, wherein: the access authentication mode corresponds to a type of a non 3rd Generation Partnership Project, non-3GPP, Internet Protocol, IP, access network where the UE currently resides, wherein the types of a non-3GPP IP access network comprise a trusted IP access network, an untrusted IP access network, and a specific IP access network.

A system for performing access authentication according to an embodiment of the present invention includes: an access control entity, configured to: communicate with a User Equipment, UE, that will access an Evolved Packet System, EPS, and notify the UE of an available access authentication mode, so that the UE performs access authentication by using the access authentication mode, wherein: the access authentication mode corresponds to a type of a non 3rd Generation Partnership Project, non-3GPP, Internet Protocol, IP access network where the UE currently resides, wherein the types of the non-3GPP IP access network comprise a trusted IP access network, an untrusted IP access network, and a specific IP access network.

An access control entity according to an embodiment of the present invention is configured to notify an available access authentication mode to a UE that will access an EPS. The access control entity includes a selecting unit, configured to select an available access authentication mode according to a type of a non 3rd Generation Partnership Proj ect, non-3GPP, Internet Protocol, IP, access network where a User Equipment, UE, that will access an Evolved Packet System, EPS, currently resides, wherein the access authentication mode corresponds to the type of a non-3GPP IP access network, wherein the types of the non-3GPP IP access network comprise a trusted IP access network, an untrusted IP access network, and a specific IP access network; and a sending unit, configured to send messages to the UE, wherein the messages comprise a message that notifies the UE of the available access authentication mode selected by the selecting unit.

A UE according to an embodiment of the present invention includes an obtaining unit, configured to obtain an available access authentication mode used by the UE to access an Evolved Packet System, EPS, wherein the access authentication mode corresponds to a type of a non 3rd Generation Partnership Project, non-3GPP, IP access network where the UE currently resides, wherein the types of the non-3GPP IP access network comprise a trusted IP access network, an untrusted IP access network, and a specific IP access network; and an executing unit, configured to execute access authentication according to the access authentication mode obtained by the obtaining unit.

According to the above technical solutions, by using the method, apparatus, and system for performing access authentication, available access authentication modes corresponding to different types of a non-3GPP IP access network are selected. In this way, the success ratio of accessing a network by a UE is increased, and the following problem is solved: the UE may not perform access authentication when accessing a network through a non-3GPP network when the network neither supports the EAP nor supports the deployment of an ePDG.

### BRIEF DESCRIPTION OF THE DRAWINGS

FIG. 1a is a schematic flowchart of a first embodiment of a method for performing access authentication according to the present invention;

FIG. 1b is a schematic flowchart of a second embodiment of the method for performing access authentication according to the present invention;

FIG. 1c is a schematic flowchart of a third embodiment of the method for performing access authentication according to the present invention;

FIG 2 is a schematic flowchart of a fourth embodiment of the method for performing access authentication according to the present invention;

FIG 3 is a schematic flowchart of a fifth embodiment of the method for performing access authentication according to the present invention;

FIG 4 is a schematic flowchart of a sixth embodiment of the method for performing access authentication according to the present invention;

FIG. 5 is a schematic flowchart of a seventh embodiment of the method for performing access authentication according to the present invention;

FIG. 6 is a schematic flowchart of an eighth embodiment of the method for performing access authentication according to the present invention;

FIG 7 is a schematic structural diagram of an embodiment of a system for performing access authentication according to the present invention;

FIG 8 is a schematic structural diagram of an embodiment of an access control entity shown in FIG 7;

FIG 9a is a schematic structural diagram of an embodiment of a UE shown in FIG 7; and

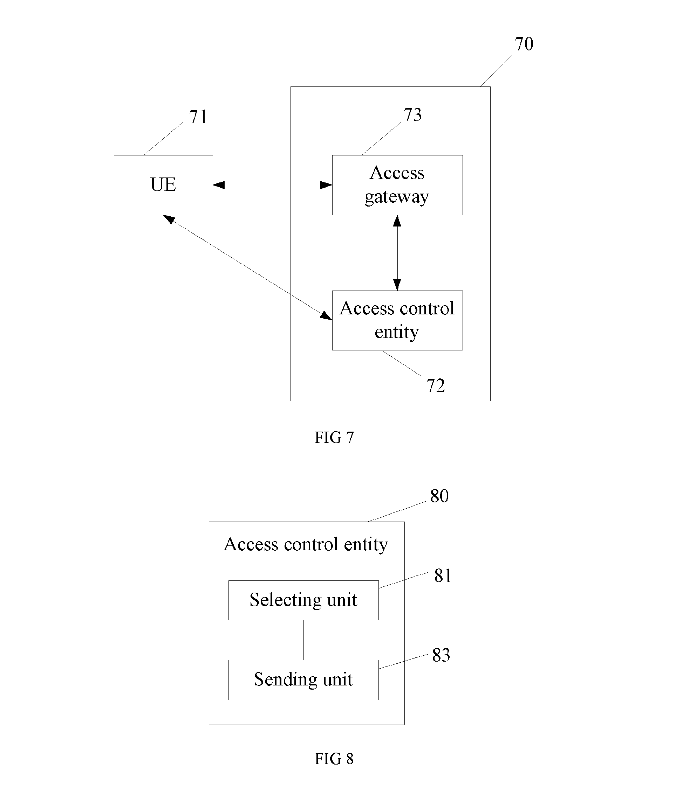

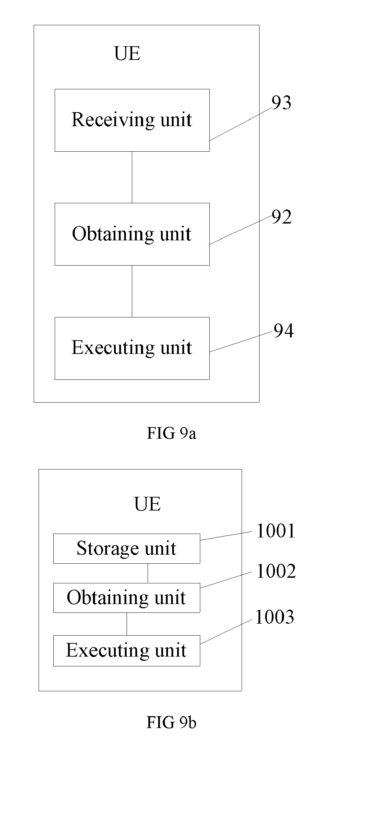

FIG. 9a is a schematic structural diagram of another embodiment of the UE shown in FIG. 7.

### DETAILED DESCRIPTION OF THE ENBODIMENTS

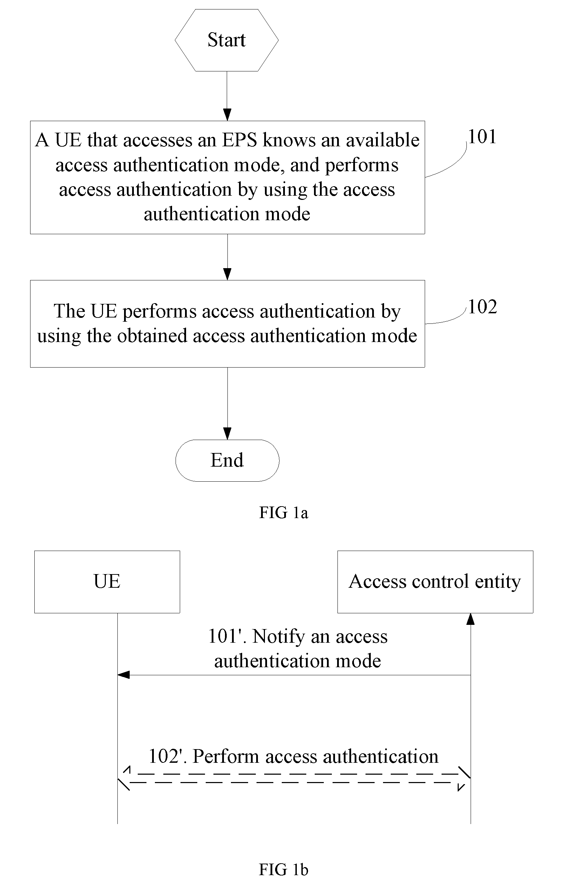

FIG. 1a is a schematic flowchart of the first embodiment of a method for performing access authentication. As shown in FIG. 1a, the method for performing access authentication according to this embodiment includes the following steps:

Step S101: An UE that will access an EPS knows an available access authentication mode to perform access authentication by using the access authentication mode. The access authentication mode corresponds to a type of a non-3GPP IP access network where the UE currently resides, wherein the types of the non-3GPP IP access network include a trusted IP access network, an untrusted IP access network, and a specific IP access network.

The available access authentication mode of the UE for accessing the EPS may be uniformly notified by a network entity, or according to the network features of the non-3GPP IP access network, the UE actively judges which access authentication mode is available for accessing this type of IP access network.

Step S102: The UE performs access authentication by using the obtained access authentication mode.

By using the method for performing access authentication according to the first embodiment of the present invention, available access authentication modes corresponding to different types of a non-3GPP IP access network are selected. In this way, the success ratio of accessing a network by a UE is increased, and the following problem is solved: the UE may not perform access authentication when accessing a network through a non-3GPP network when the network neither supports the EAP nor supports the deployment of an ePDG.

FIG. 1b is a schematic flowchart of the second embodiment of the method for performing access authentication. As shown in FIG. 1b, the method for performing access authentication according to the second embodiment of the present invention includes the following steps:

Step S101': An access control entity notifies an available access authentication mode to a UE that will access the EPS, where the access authentication mode corresponds to a type of a non-3GPP IP access network. The types of a non-3GPP IP access network include a trusted IP access network, an untrusted IP access network, and a specific IP access network.

When the access control entity discovers the UE that will access the EPS, the access control entity may actively notify the UE of the available access authentication mode through a broadcast message or a message sent from a lower layer, that is, the message may be transmitted at the network layer or data link layer. More specifically, the access control entity may notify the UE of the available access authentication mode by using the parameters carried in the message.

Step S102': The UE performs access authentication by using the notified access authentication mode.

By using the method for accessing an EPS according to the second embodiment of the present invention, a new network entity may be constructed to notify the UE of which authentication mode needs to be used to access an EPS through the non-3GPP IP access network or which access network gateway may be found to perform the authentication. In this way, the access efficiency of the UE is improved, and the following problem is solved: the UE may not perform access authentication with the EPS when the access network neither supports the EAP nor supports the deployment of an ePDG. The access control entity may be also an access network gateway, for example, the Access Service Network gateway (ASN gateway) on the WiMAX network, or other servers that may provide the UE with information, for example, the Dynamic Host Configuration Protocol (DHCP) server.

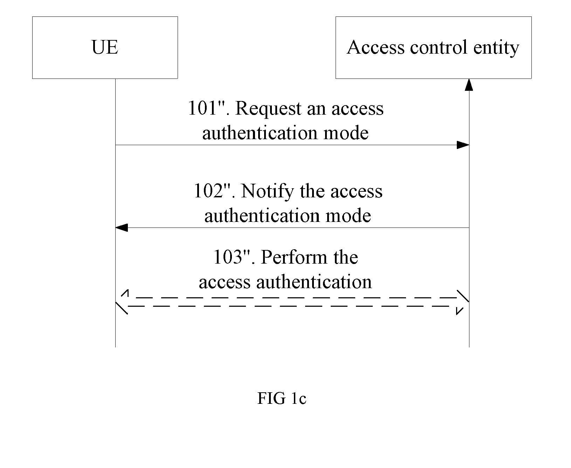

FIG 1c is a schematic flowchart of the third embodiment of the method for performing access authentication. As shown in FIG 1c, the method for performing access authentication according to the third embodiment of the present invention includes the following steps:

Step 101": The access control entity receives a message from the UE that will access the EPS, where the message requests an access authentication mode. This message may be transmitted at the network layer or the data link layer.

Step 102": The access control entity notifies the available access authentication mode to the UE that will access the EPS, where the access authentication mode corresponds to a type of a non-3GPP IP access network. The types of a non-3GPP IP access network include a trusted IP access network, an untrusted IP access network, and a specific IP access network. The access control entity may notify the UE of the available access authentication mode by using the parameters carried in a response message.

Step 103": The UE performs access authentication by using the notified access authentication mode.

By using the method for accessing an EPS according to the third embodiment of the present invention, a new network entity may be constructed to notify the UE of which authentication mode needs to be used to access an EPS through the non-3GPP IP access network or which access network gateway may be found to perform the authentication. In this way, the access efficiency of the UE is improved, and the following problem is solved: the UE may not perform access authentication with the EPS when the access network neither supports the EAP nor supports the deployment of an ePDG.

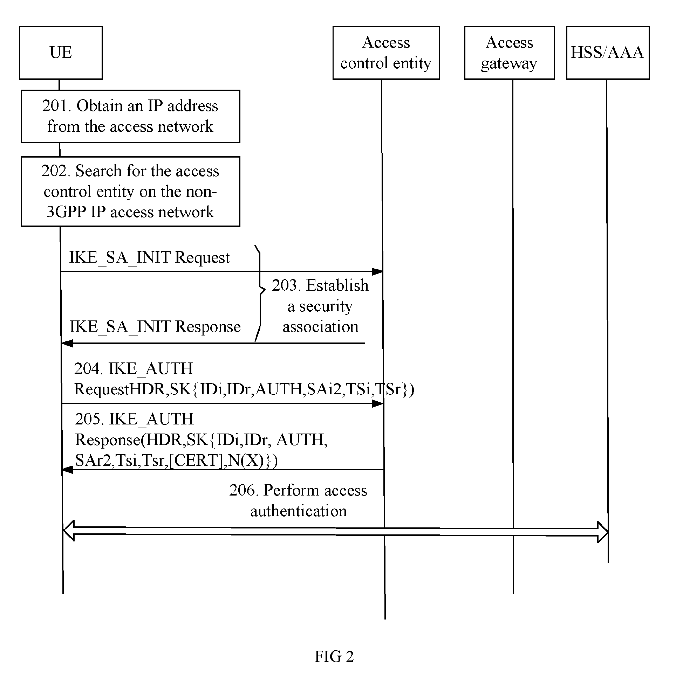

FIG. 2 is a schematic flowchart of the fourth embodiment of the method for performing access authentication. In this embodiment, the method for performing access authentication is described based on the fact that the access control entity is a network entity on a non-3GPP IP access network.

Step 201: The UE obtains a temporary IP address from the non-3GPP IP access network.

Step 202: The UE searches for the access control entity on the non-3GPP IP access network.

The IP access network may be a CDMA2000 network, a WiMAX network, or a WLAN. The entity on the non-3GPP IP access network may include an access network gateway, for example, the ASN gateway on the WiMAX network, or a server that may provide the UE with information, for example, the DHCP server.

Step 203: The UE establishes a security association (SA) with the access control entity by using the previously allocated temporary IP address. The SA may be established by using an IKE_SA_INIT message for the key negotiation and nonce value exchange.

Specifically, the IKE_SA_INIT message includes two messages. One is an IKE_SA_INIT Request sent from a sender. The IKE_SA_INIT Request may include such parameters as HDR, SAi1, Kei, and Ni. The HDR includes security parameter indexes (SPIs), a version number, and some flags. The SAi1 includes encryption algorithms that are supported by the IKE SA established by the sender. The KE refers to the Diffie-Hellman (DH) value of the sender, and N refers to a random number payload. The other message in the IKE_SA_INIT message is an IKE_SA_INIT_Response initiated by the receiver. The IKE_SA_INIT_Response includes such parameters as HDR, SAr1, Ker, Nr, and [CERTREQ]. The SAr1 includes an algorithm selected by the receiver, the [CERTREQ] refers to a certificate request, and other parameters correspond to the parameters in the IKE_SA_INIT Request. By exchanging the IKE_SA_INIT message, the sender negotiates the needed encryption algorithms and authentication algorithms with the receiver. By exchanging the random number and the KE, the sender and the receiver exchange the DH value, and calculate a shared key. This key is used to protect subsequent data and keys needed for generating an IPsec SA. In this embodiment, the sender is the UE, and the receiver is an access control entity on the non-3GPP IP access network.

Step 204: The UE sends a message to the access control entity to request an access authentication mode. The UE sends an IKE_AUTH Request to the non-3GPP IP access network, where the IKE_AUTH Request may include such parameters as HDR and SK{IDi, IDr, AUTH, SAi2, TSi, TSr}. The HDR includes SPIs, a version number, and some flags. The SK indicates that packets are protected. In this case, the authentication (AUTH) parameter is set to null to request the access control entity for an access authentication mode. The SAi2 carries a key algorithm list for the IPsec SA. The TS indicates data streams protected by the IPsec SA.

Step 205: The access control entity sends the IKE_AUTH Response to the UE according to the temporary IP address obtained by the UE to notify the UE of an available access authentication mode. The access control entity may notify the UE of the available access authentication mode by using an N[x] parameter included in the IKE_AUTH Response.

In general, the IKE_AUTH Response may not carry the N[x] parameter, but carries the N[x] parameter only in the case of errors. In this embodiment, the access control entity notifies the UE of the available authentication mode by using the N[x] parameter. N refers to the Notify Payload. This parameter is generally used to carry information notification data, for example, error conditions or data status information. X refers to some optional parameter type values. Some Notify type values are used when an error type occurs. Therefore, some remaining type values may be used as the Notify type in this embodiment.

Optionally, except the N[x] parameter, other parameters with reserved values may be used as the parameters carrying an authentication mode.

Specifically, the IKE_AUTH Response may further carry such parameters as HDR, and SK{IDi, IDr, AUTH, SAr2, TSi, TSr, [CERT]}. The HDR includes SPIs, a version number, and some flags. The SK indicates that packets are protected. The AUTH is used to prove that an ID related secret is known, and perform integrity protection on the previous and current data packets. The SAi2 carries a key algorithm list for the IPsec SA. The TS indicates data streams protected by the IPsec SA.

Step 206: The UE performs access authentication with the access gateway by using the notified access authentication mode. The access gateway may be a gateway on the IP access network, or a gateway on the core network.

In this embodiment, the message is carried over the Internet Key Exchange (IKE) protocol, so that the integrity protection may be performed on the carried message in IKE + certificate mode. The message may also be carried in other modes, for example, the message is carried over the Diameter protocol or the Hyper Text Transfer Protocol (HTTP).

In this embodiment, the access control entity notifies the UE of an authentication mode that the network decides to use through the N[x] payload in the IKE_AUTH Response. The authentication modes indicated by the N[x] vary according to the value of x. On condition that the value of x do not conflict with a current value of x in use, the N[x] refers to the access authentication mode of a Trusted non-3GPP IP access network, for example, EAP-AKA or EAP-AKA', and the access authentication mode of an Untrusted non-3GPP IP access network, for example, IKEv2+EAP-AKA, or the access authentication mode of a specific non-3GPP IP access network. In this way, the access control entity on the non-3GPP IP access network uniformly notifies the UE of which access authentication mode is used.

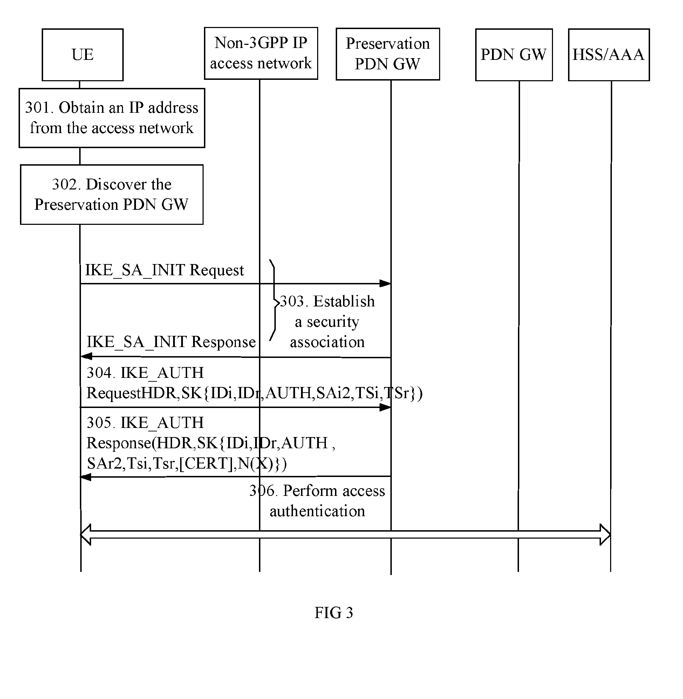

FIG. 3 is a schematic flowchart of the fifth embodiment of the method for performing access authentication. In a scenario of this embodiment, the UE is neither pre-configured to perform authentication according to an access authentication mode of the Trusted non-3GPP IP access network nor pre-configured to perform authentication according to an access authentication mode of the Untrusted non-3GPP IP access network. In this embodiment, the method for performing access authentication is described based on the fact that the access control entity is a preservation packet data network gateway (Preservation PDN GW).

As shown in FIG 3, the method for performing access authentication according to this embodiment includes the following steps:

Step 301: The UE obtains a temporary IP address from the non-3GPP IP access network.

Step 302: The UE discovers and selects a Preservation PDN GW

The Preservation PDN GW is a newly added entity in this embodiment and has a function of protecting the PDN GW It may provide the UE with an access authentication mode.

Step 303: The UE establishes an SA with the Preservation PDN GW by using the previously allocated temporary IP address. The SA may be established by using an IKE_SA_INIT message for the key negotiation and nonce value exchange.

Specifically, the IKE_SA_INIT message includes two messages. One is an IKE_SA_INIT Request sent from a sender. The IKE_SA_INIT Request may include such parameters as HDR, SAi1, Kei, and Ni. The HDR includes SPIs, a version number, and some flags. The SAi1 includes encryption algorithms that are supported by the IKE SA established by the sender. The KE refers to a DH value of the sender, and N refers to a random number payload. The other message in the IKE_SA_INIT message is an IKE_SA_INIT_Response initiated by the receiver. The IKE_SA_INIT_Response includes such parameters as HDR, SAr1, Ker, Nr, and [CERTREQ]. The SAr1 includes an algorithm selected by the receiver, the [CERTREQ] refers to a certificate request, and other parameters correspond to the parameters in the IKE_SA_INIT Request. By exchanging the IKE_SA_INIT message, the sender negotiates the needed encryption algorithms and authentication algorithms with the receiver. By exchanging the random number and the KE, the sender and the receiver exchange the DH value, and calculate a shared key. This key is used to protect subsequent data and keys needed for generating an IPsec SA. In this embodiment, the sender is the UE, and the receiver is the Preservation PDN GW.

Step 304: The UE sends a message to the Preservation PDN GW to request an access authentication mode. The UE sends an IKE_AUTH Request to the Non-3GPP IP access network, where the IKE_AUTH Request may include such parameters as HDR and SK{IDi, IDr, AUTH, SAi2, TSi, TSr}. The HDR includes SPIs, a version number, and some flags. The SK indicates that packets are protected. In this case, the AUTH parameter is set to null to request the access control entity for the access authentication mode. The SAi2 carries a key algorithm list for the IPsec SA. The TS indicates data streams protected by the IPsec SA.

Step 305: The Preservation PDN GW sends an IKE_AUTH Response to the temporary IP address of the UE, notifying the UE of an available access authentication mode. The access control entity may notify the UE of the available access mode by using the N[x] parameter included in the IKE_AUTH Response.

Step 306: The UE performs access authentication by using the notified access authentication mode.

In this embodiment, the message is carried over the IKE protocol, so that the integrity protection may be performed on the carried message in IKE + certificate mode. The message may also be carried in other modes, for example, it is carried over the Diameter protocol or the HTTP Protocol.

In this embodiment, the Preservation PDN GW is a protection entity of the PDN GW, and may be regarded as a security gateway for communications between the core network and the non-3GPP IP access network. The Preservation PDN GW may reserve other functions for the network in addition to the functions described in this embodiment.

In this embodiment, the access control entity notifies the UE of an authentication mode that the network decides to use through the N[x] payload in the IKE_AUTH Response. The authentication modes indicated by the N[x] vary according to the value of x. On condition that the value of x do not conflict with a current value of x in use, the N[x] refers to the access authentication mode of a Trusted non-3GPP IP access network, for example, EAP-AKA or EAP-AKA', and the access authentication mode of an Untrusted non-3GPP IP access network, for example, IKEv2+EAP-AKA, or the access authentication mode of a specific non-3GPP IP access network. In this way, the Preservation PDN GW uniformly notifies the UE of which access authentication mode is used to access the EPS.

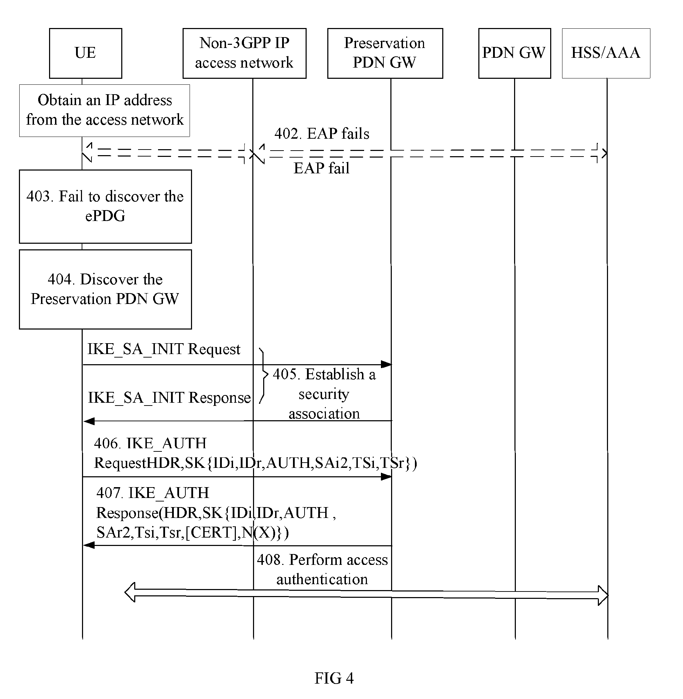

FIG. 4 is a schematic flowchart of the sixth embodiment of the method for performing access authentication. In a scenario in this embodiment, the UE is pre-configured to perform authentication according to the access authentication mode of the Trusted non-3GPP IP access network. In this embodiment, the method for performing access authentication is described based on the fact that the access control entity is a Preservation PDN GW.

As shown in FIG. 4, the method for performing access authentication according to this embodiment includes the following steps:

Step 401: The UE obtains a temporary IP address from the non-3GPP IP access network.

Step 402: The UE performs the EAP authentication with the non-3GPP IP access network; if the authentication fails, the process proceeds to step 403.

Step 403: The UE searches for and discovers an ePDG, that is, the non-3GPP IP access network is accessed as an untrusted IP access network. If the UE finds the ePDG, the UE performs access authentication by using a corresponding access authentication mode of the untrusted IP access network. If the ePDG is not deployed on the non-3GPP IP access network, the UE fails to discover the ePDG. Then, the process proceeds to step 404.

Step 404: The UE discovers and selects a Preservation PDN GW.

The Preservation PDN GW is a newly added entity in this embodiment and has a function of protecting the PDN GW. It may provide the UE with an access authentication mode.

Step 405: The UE establishes an SA with the Preservation PDN GW by using the previously allocated temporary IP address. The SA may be established by using an IKE_SA_INIT message for the key negotiation and nonce value exchange.

Step 406: The UE sends an IKE_AUTH Request to the Preservation PDN GW, requesting an access authentication mode. The IKE_AUTH Request may include such parameters as HDR and SK{IDi, IDr, AUTH, SAi2, TSi, TSr}. The HDR includes SPIs, a version number, and some flags. The SK indicates that packets are protected. In this case, the AUTH parameter is set to null to request the access control entity for the access authentication mode. The SAi2 carries a key algorithm list for the IPsec SA. The TS indicates data streams protected by the IPsec SA.

Step 407: The Preservation PDN GW sends an IKE_AUTH Response to the temporary IP address of the UE, notifying the UE of an available access authentication mode. The access control entity may notify the UE of the available access mode by using the N[x] parameter included in the IKE_AUTH Response.

Step 408: The UE performs access authentication by using the notified access authentication mode.

In this embodiment, step 404 to step 408 are the same as step 301 to step 305 in the third embodiment of the present invention, so step 404 to step 408 are not further described.

In this embodiment, the access control entity notifies the UE of an authentication mode that the network decides to use through the N[x] payload in the IKE_AUTH Response. The authentication modes indicated by the N[x] vary according to the value of x. On condition that the value of x do not conflict with a current value of x in use, the N[x] refers to the access authentication mode of a Trusted non-3GPP IP access network, for example, EAP-AKA or EAP-AKA', and the access authentication mode of an Untrusted non-3GPP IP access network, for example, IKEv2+EAP-AKA, or the access authentication mode of a specific non-3GPP IP access network. In this way, the Preservation PDN GW uniformly notifies the UE of which access authentication mode is used to access the EPS.

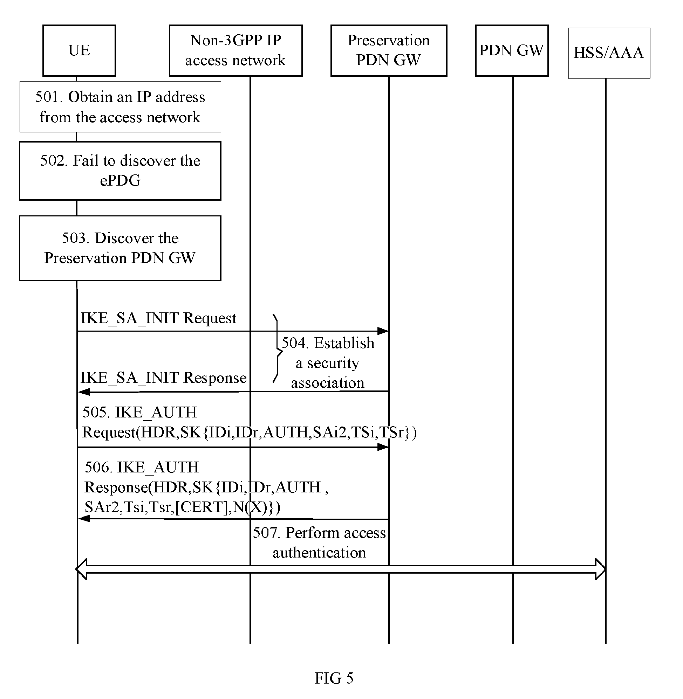

FIG 5 is a schematic flowchart of the seventh embodiment of the method for performing access authentication. In a scenario in this embodiment, the UE is pre-configured to perform authentication according to the access authentication mode of the Untrusted non-3GPP IP access network. In this embodiment, the method for performing access authentication is described based on the fact that the access control entity is a Preservation PDN GW.

As shown in FIG 5, the method for performing access authentication according to this embodiment includes the following steps:

Step 501: The UE obtains a temporary IP address from the IP access network.

Step 502: The UE searches for and discovers an ePDG, that is, the non-3GPP IP access network is accessed as an untrusted IP access network. If the UE finds the ePDG, the UE performs access authentication by using a corresponding access authentication mode of the untrusted IP access network. If the ePDG is not deployed on the non-3GPP IP access network, the UE fails to find the ePDG. Then, the process proceeds to step 503.

Step 503: The UE discovers and selects a Preservation PDN GW.

The Preservation PDN GW is a newly added entity in this embodiment and has a function of protecting the PDN GW. It may provide the UE with an access authentication mode.

Step 504: The UE establishes an SA with the Preservation PDN GW by using the previously allocated temporary IP address. The SA may be established by using an IKE_SA_INIT message for the key negotiation and nonce value exchange.

Step 505: The UE sends an IKE_AUTH Request to the Preservation PDN GW, requesting an access authentication mode. The IKE_AUTH Request may include such parameters as HDR and SK{IDi, IDr, AUTH, SAi2, TSi, TSr}. The HDR includes SPIs, a version number, and some flags. The SK indicates that packets are protected. In this case, the AUTH parameter is set to null to request the access control entity for the access authentication mode. The SAi2 carries a key algorithm list for the IPsec SA. The TS indicates data streams protected by the IPsec SA.

Step 506: The Preservation PDN GW sends an IKE_AUTH Response to the temporary IP address of the UE, notifying the UE of an available access authentication mode. The access control entity may notify the UE of the available access mode by using the N[x] parameter included in the IKE_AUTH Response.

Step 507: The UE performs access authentication by using the notified authentication mode.

In this embodiment, step 502 to step 507 are the same as step 403 to step 408 in the fourth embodiment of the present invention, so step 502 to step 507 are not further described.

In this embodiment, the access control entity notifies the UE of an access authentication mode that the network decides to use through the N[x] payload in the IKE_AUTH Response. The access authentication modes indicated by the N[x] vary according to the value of x. On condition that the value of x do not conflict with a current value of x in use, the N[x] refers to the access authentication mode of a Trusted non-3GPP IP access network, for example, EAP-AKA or EAP-AKA', and the access authentication mode of an Untrusted non-3GPP IP access network, for example, IKEv2+EAP-AKA, or the access authentication mode of a specific non-3GPP IP access network. In this way, the Preservation PDN GW uniformly notifies the UE of which access authentication mode is used to access the EPS.

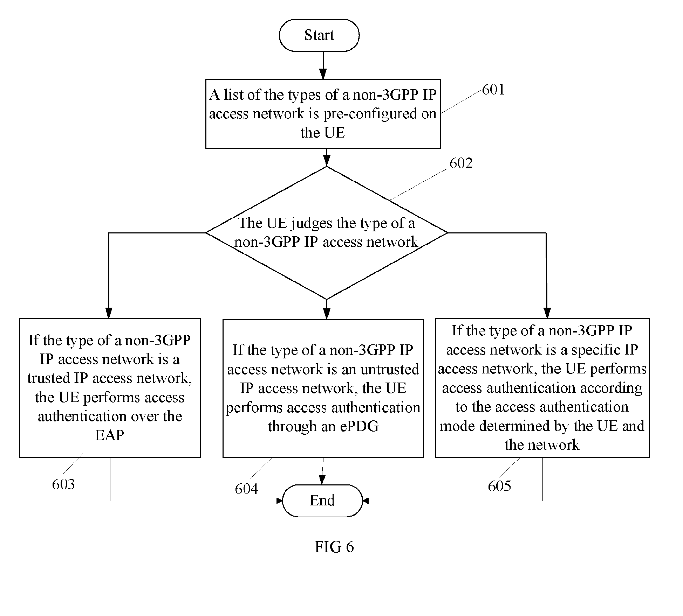

FIG. 6 is a schematic flowchart of the eighth embodiment of the method for performing access authentication. In this embodiment, a method is pre-configured on the UE to access the EPS.

As shown in FIG 6, the method for performing access authentication according to this embodiment includes the following steps:

Step 601: A list of the types of a non-3GPP IP access network and corresponding available access authentication modes are pre-configured on the UE. The types of a non-3GPP IP access network include a trusted IP access network, an untrusted IP access network, and a specific IP access network.

Specifically, the specific IP access network may neither use the access authentication mode of the trusted IP access network nor use the access authentication mode of the untrusted IP access network.

Step 602: The UE knows the type of a non-3GPP IP access network that the UE will access. The UE may know the type of a non-3GPP IP access network according to the network features included in a received message.

Then, the UE knows the available access authentication mode according to the list and a type of a non-3GPP IP access network where the UE currently resides.

Step 603: If the type of a non-3GPP IP access network is a trusted IP access network, the UE performs access authentication over the EAP.

When the UE accesses the WiMAX network and the CDMA2000 network, the UE uses the EAP-AKA or EAP-AKA' access authentication mode.

Step 604: If the type of a non-3GPP IP access network is an untrusted IP access network, the UE searches for an ePDG, and performs access authentication through the ePDG.

Specifically, if the UE accesses the WLAN, the UE uses the IKEv2+EAP-AKA authentication mode.

Step 605: If the type of a non-3GPP IP access network is a specific IP access network, the UE performs access authentication according to the access mode determined by the UE and the network. That is, when the network neither supports EAP-AKA nor supports the deployment of an ePDG, the UE performs access authentication by using a specific mode.

By using the method for performing access authentication according to this embodiment, a list of the types of a non-3GPP IP access network and corresponding available access authentication modes are configured on the UE. In this way, when the UE knows the type of a non-3GPP IP access network where the UE currently resides, the UE may know a corresponding available access authentication mode, therefore the access efficiency of the UE is improved.

It is understandable to those skilled in the art that all or part of the steps in the methods according to the preceding embodiments may be performed by hardware instructed by a program. The program may be stored in a computer readable storage medium, such as a read only memory or random access memory (ROM/RAM), a magnetic disk, and a compact disk-read only memory (CD-ROM).

Although the steps of the methods provided in embodiments of the present invention are described in sequence, the sequence of these steps may not be strictly limited.

FIG 7 is a schematic structural diagram of an embodiment of a system for performing access authentication. As shown in FIG 7, the system 70 for access authentication includes an access control entity 72 and an access gateway 73. The access control entity 72 is configured to: communicate with a UE 71 that will access an EPS, and notify the UE 71 of an available access authentication mode, so that the UE 71 performs access authentication by using the notified access authentication mode. The preceding access authentication mode corresponds to a type of a non-3GPP IP access network. The types of a non-3GPP IP access network include a trusted IP access network, an untrusted IP access network, and a specific IP access network. The access gateway 73 is configured to perform access authentication with the UE 71 according to the available access authentication mode obtained by the UE 71.

The access gateway 73 refers to a gateway on the access network, for example, an ePDG, or a gateway on the core network. The access gateway 73 is configured to: route and encapsulate user data packets, and allocate IP addresses to users.

Specifically, if the available access authentication mode is notified by an access control entity in the EPS, the access gateway is a PDN GW and the access control entity is a Preservation PDN GW. The response message is transmitted over the IKE protocol, and notifies the UE 71 of the available access authentication mode by using the Notify Payload parameter carried in the response message.

In this embodiment, the access control entity is a new network entity and has a function of protecting the PDN GW. It may provide the UE with access authentication mode.

Optionally, the functions of the access control entity may be implemented by other network entities, for example, these functions are implemented by the access gateway 73, such as the PDN GW or the ePDG.

FIG 8 is a schematic structural diagram of an embodiment of the access control entity shown in FIG 7. As shown in FIG 8, the access control entity 80 provided in this embodiment includes a selecting unit 81 and a sending unit 83.

The selecting unit 81 is configured to select an available access authentication mode according to a type of a non-3GPP IP access network where the UE that will access an EPS currently resides, where the access authentication mode corresponds to the type of a non-3GPP IP access network, wherein the types of a non-3GPP IP access network include a trusted IP access network, an untrusted IP access network, and a specific IP access network. The sending unit 83 is configured to send messages to the UE that will access the EPS, where the messages include a message that notifies the UE of the available authentication mode selected by the selecting unit. The message that is sent from the sending unit 83 and notifies the UE of an access authentication mode available for accessing the EPS may be transmitted over the IKE protocol. This message notifies the UE of an available access authentication mode by using the Notify Payload parameter carried in this message.

Specifically, in the EPS, the access control entity is the Preservation PDN GW, which is a new network entity and has a function of protecting the PDN GW. It may provide the UE with an access authentication mode. The access control entity may also be an entity on a non-3GPP IP access network, for example, the ASN gateway on the WiMAX network, or be a server that may provide the UE with information, for example, the DHCP server.

FIG. 9a is a schematic diagram of an embodiment of the UE shown in FIG. 7. The UE in this embodiment is applicable to the third embodiment to the seventh embodiment of the method for accessing the EPS. As shown in FIG. 9a, the UE includes an obtaining unit 92, a receiving unit 93, and an executing unit 94.

The receiving unit 93 is configured to receive a message sent from the access control entity 72, where the message includes a response message that notifies an available access authentication mode. The available access authentication mode corresponds to the type of anon-3GPP IP access network where the UE currently resides. The types of a non-3GPP IP access network include a trusted IP access network, an untrusted IP access network, and a specific IP access network.

The obtaining unit 92 is configured to obtain the available access authentication mode for accessing the EPS from the message that is received by the receiving unit 93 and notifies the access authentication mode.

The executing unit 94 is configured to execute access authentication according to the access authentication mode obtained by the obtaining unit 93.

Specifically, the response message that is received by the receiving unit 93 and notifies the access authentication mode may be transmitted over the IKE protocol. The response message carries a Notify Payload parameter that notifies available access authentication mode.

The UE may further include a sending unit configured to send a message to the access control entity to request an access authentication mode. Alternatively, after the access control entity discovers the UE, the access control entity may actively notify the UE of an available access authentication mode through a broadcast message or other messages sent from a lower layer, that is, the message may be transmitted at the network layer or the data link layer. This case corresponds to the second embodiment of the method for accessing the EPS.

FIG. 9b is a schematic diagram of another embodiment of the UE shown in FIG. 7. The UE in this embodiment is applicable to the eighth embodiment of the method for accessing the EPS. As shown in FIG. 9b, the UE includes a storage unit 1001, an obtaining unit 1002, and an executing unit 1003.

The storage unit 1001 is configured to store a list of the types of a non-3GPP IP access network and corresponding available access authentication modes. The types of a non-3GPP IP access network include a trusted IP access network, an untrusted IP access network, and a specific IP access network.

The obtaining unit 1002 is configured to obtain an access authentication mode according to a type of a non-3GPP IP access network where the UE currently resides and the list stored in the storage unit 1001.

The executing unit 1003 is configured to execute access authentication according to the access authentication mode obtained by the obtaining unit 1002.

Specifically, the specific IP access network may neither use the access authentication mode of the trusted IP access network nor use the access authentication mode of the untrusted IP access network.

It is understandable to those skilled in the art that the modules in the apparatus in the embodiments of the present invention may be distributed in the way described herein, or distributed in another way with some changes, for example, in one or more apparatuses that are different from the apparatus in this embodiment. The modules in the embodiments may be combined into one, or split into several submodules.

The above sequence numbers of the embodiments are intended for a clear description, and do not represent the order of preference. Although the present invention has been described through some exemplary embodiments, the invention is not limited to such embodiments. Any modification or equivalent combination made without departing from the principle of the present invention should fall within the scope of the present invention.

## Claims

1. A method for performing access authentication, comprising:
knowing, by a User Equipment, UE, that will access an Evolved Packet System, EPS, an available access authentication mode, and performing access authentication by using the access authentication mode, wherein:
the access authentication mode corresponds to a type of a non 3rd Generation Partnership Project, non-3GPP, IP, access network where the UE currently resides, wherein the types of the non-3GPP IP access network comprise a trusted IP access network, an untrusted IP access network, and a specific IP access network.

2. The method of claim 1, wherein the knowing, by the UE, the available access authentication mode comprises:
receiving, by the UE, a message that is sent from an access control entity and notifies the available access authentication mode.

3. The method of claim 2, wherein before the UE receives the message that is sent from the access control entity and notifies the available access authentication mode, the method further comprises:
sending a message to the access control entity to request the access authentication mode.

4. The method of claim 3, wherein the sending the message to the access control entity to request the access authentication mode comprises:
sending a message whose authentication, AUTH, parameter is null to the access control entity to request the access authentication mode.

5. The method of claim 2, wherein the receiving the message that is sent from the access control entity and notifies the available access authentication mode comprises:
receiving, by the UE, a network layer message or a data link layer message that is sent from the access control entity and notifies the available access authentication mode, wherein the network layer message or the data link layer message carries a parameter used for notifying the UE of the available access authentication mode.

6. The method of claim 5, wherein:
before the UE receives the network layer message that is sent from the access control entity and notifies the available access authentication mode, the method further comprises:
obtaining, by the UE, a network address from the non-3GPP IP access network;
the receiving the network layer message that is sent from the access control entity and notifies the available access authentication mode comprises:
receiving, by the UE, the network layer message that is sent by the access control entity to the network address and notifies the available access authentication mode.

7. The method of claim 5 or 6, wherein the receiving the network layer message that is sent by the access control entity and notifies the available access authentication mode comprises:
receiving, by the UE, an Internet Key Exchange, IKE, message from the access control entity, and knowing the available access authentication mode through a Notify Payload parameter in the IKE message.

8. The method of claim 1, wherein:
before the UE knows the available access authentication mode, the method further comprises:
pre-configuring a list of types of a non-3GPP IP access network and corresponding available access authentication modes on the UE; and
the knowing the available access authentication mode by the UE comprises:
selecting, according to the list, an available access authentication mode that corresponds to a type of a non-3GPP IP access network where the UE currently resides.

9. The method of claim 8, wherein:
if the type of a non-3GPP IP access network where the UE currently resides is a trusted IP access network, the available access authentication mode comprises: performing access authentication over an Extensible Authentication Protocol, EAP;
if the type of a non-3GPP IP access network where the UE currently resides is an untrusted IP access network, the available access authentication mode comprises: searching for an evolved Packet Data Gateway, ePDG, and performing access authentication through the PDG; and
if the type of a non-3GPP IP access network where the UE currently resides is a specific IP access network, the available access authentication mode comprises: performing access authentication according to a predetermined access mode.

10. A method for performing access authentication, comprising:
notifying, by an access control entity, an available access authentication mode to a User Equipment, UE, that will access an Evolved Packet System, EPS, so that the UE performs access authentication by using the access authentication mode, wherein:
the access authentication mode corresponds to a type of a non 3rd Generation Partnership Project, non-3GPP, Internet Protocol, IP, access network where the UE currently resides, wherein the types of a non-3GPP IP access network comprise a trusted IP access network, an untrusted IP access network, and a specific IP access network.

11. The method of claim 10, wherein before the access control entity notifies the available access authentication mode to the UE that will access the EPS, the method further comprises:
receiving, by the access control entity, a message from the UE, wherein the message requests the access authentication mode.

12. A system for performing access authentication, comprising:
an access control entity, configured to: communicate with a User Equipment, UE, that will access an Evolved Packet System, EPS, and notify the UE of an available access authentication mode, so that the UE performs access authentication by using the access authentication mode, wherein:
the access authentication mode corresponds to a type of a non 3rd Generation Partnership Project, non-3GPP, Internet Protocol, IP access network where the UE currently resides, wherein the types of the non-3GPP IP access network comprise a trusted IP access network, an untrusted IP access network, and a specific IP access network.

13. The system of claim 12, further comprising:
an access gateway, configured to perform access authentication with the UE according to the available access authentication mode of the UE.

14. The system of claim 13, wherein the access control entity may be integrated with the access gateway or be independent of the access gateway and has a function of protecting the access gateway.

15. An access control entity, comprising:
a selecting unit, configured to select an available access authentication mode according to a type of a non 3rd Generation Partnership Project, non-3GPP, Internet Protocol, IP, access network where a User Equipment, UE, that will access an Evolved Packet System, EPS, currently resides, wherein the access authentication mode corresponds to the type of a non-3GPP IP access network, wherein the types of the non-3GPP IP access network comprise a trusted IP access network, an untrusted IP access network, and a specific IP access network; and
a sending unit, configured to send messages to the UE, wherein the messages comprise a message that notifies the UE of the available access authentication mode selected by the selecting unit.

16. A User Equipment, UE, comprising:
an obtaining unit, configured to obtain an available access authentication mode used by the UE to access an Evolved Packet System, EPS, wherein the access authentication mode corresponds to a type of a non 3rd Generation Partnership Project, non-3GPP, IP access network where the UE currently resides, wherein the types of the non-3GPP IP access network comprise a trusted IP access network, an untrusted IP access network, and a specific IP access network; and
an executing unit, configured to execute access authentication according to the access authentication mode obtained by the obtaining unit.

17. The UE of claim 16, further comprising:
a receiving unit, configured to receive a message that is sent from an access control entity and notifies the available access authentication mode; and
the obtaining unit, configured to obtain the available access authentication mode for accessing the EPS from the message that is received by the receiving unit and notifies the available access authentication mode.

18. The UE of claim 16, further comprising:
a storage unit, configured to store a list of the types of a non-3GPP IP access network and corresponding available access authentication modes, wherein the types of the non-3GPP IP access network comprise a trusted IP access network, an untrusted IP access network, and a specific IP access network; and
the obtaining unit, configured to obtain an access authentication mode according to a type of a non-3GPP IP access network where the UE currently resides and the list stored in the storage unit.
